# EUROPÄISCHE PATENTSCHRIFT

(11) **EP 1 166 039 B1**
(45) Veröffentlichungstag und Bekanntmachung des Hinweises auf die Patenterteilung: **06.10.2004**
(21) Anmeldenummer: 00926692.5
(22) Anmeldetag: 29.03.2000
(51) Int. Cl.: G01B 7/30

(54) **VERFAHREN UND VORRICHTUNG ZUR AUTOMATISCHE EINSTELLUNG DER ACHSENGEOMETRIE EINES HÄNGENDEN FAHRZEUGS IN EINER FERTIGUNGSLINIE**
METHOD AND DEVICE FOR AUTOMATICALLY ADJUSTING THE AXLE GEOMETRY OF A SUSPENDED VEHICLE IN A PRODUCTION LINE
PROCEDE ET DISPOSITIF POUR REGLER DE FACON AUTOMATIQUE LA GEOMETRIE AXIALE D'UN VEHICULE SUSPENDU DANS UNE CHAINE DE PRODUCTION

(30) Priorität: 30.03.1999 DE 19914328; 29.02.2000 WO PCT/DE00/00575
(43) Veröffentlichungstag der Anmeldung: 02.01.2002
(73) Patentinhaber: SIEMENS AKTIENGESELLSCHAFT, 80333 München (DE)
(72) Erfinder: JAHN, Lars, D-90431 Nürnberg (DE); SCHNEIDER, Frank, D-90473 Nürnberg (DE)
(86) Internationale Anmeldenummer: PCT/DE2000/000956
(87) Internationale Veröffentlichungsnummer: WO 2000/060309

(56) Entgegenhaltungen:
- EP-A- 0 679 865
- DE-A- 19 636 427
- FR-A- 2 677 445
- FR-A- 2 769 704
- US-A- 5 040 303

## Beschreibung

Die Erfindung betrifft ein Verfahren zur Einstellung der Achsengeometrie eines Fahrzeugs. Die Erfindung betrifft ferner eine Einstellvorrichtung zur Durchführung des Verfahrens. Die Erfindung betrifft schließlich eine Fertigungslinie für Fahrzeuge, welche Montageeinrichtungen und eine erfindungsgemäße Einstellvorrichtung für die Achsengeometrie aufweist.

In bisherigen Fertigungsanlagen ist es üblich, die Einstellung der Achsengeometrie eines Fahrzeugs nach Abschluss des Fertigungsprozesses auf manuelle Weise vorzunehmen. Dabei hat das Fahrzeug den Bereich einer Montageeinrichtungen verlassen. Die Fahrzeuge werden nun manuell einem Bereich zugeführt, in dem u.U. mehrere, parallele Stände für die Einstellung der Achsengeometrie angeordnet sind. Diese können Gruben aufweisen, in denen Monteure tätig sind. Über diesen Gruben werden die Fahrzeuge platziert. Anschließend können die Fahrwerke der Fahrzeuge in einer quasi werkstattmäßigen Weise von Personal eingestellt werden.

Aus der US 5,040,303 sind ein Verfahren und eine Vorrichtung zur Achseinstellung eines Fahrzeugs bekannt. Die Vorrichtung enthält einen automatischen Einstellstand, der in einer Grube angeordnet ist. Für eine Einstellung muss ein Fahrzeug z.B. durch eine Person und zumindest mit Hilfe des eigenen Fahrwerks über dem Einstellstand plaziert werden. Der Einstellstand ist so ausgelegt, dass Einstellungen an Fahrzeugen vorgenommen werden, welche ein sogenanntes "gesetztes" Fahrwerk aufweisen. Bei solchen Fahrzeugen hat zumindest das volle Fahrzeuggewicht bereits über einen längeren Zeitraum auf das Fahrwerk eingewirkt, so dass Verspannungen unterschiedlichster Art zum Teil abgeklungen sind.

Aus der US 5,027,275 sind ebenfalls ein Verfahren und eine Vorrichtung zur Achseinstellung eines Fahrzeugs bekannt. Die Vorrichtung enthält einen automatischen Einstellstand, der in einer Grube angeordnet ist. Für eine Einstellung muss ein Fehrzeug z.B. durch eine Person und zumindest mit Hilfe des eigenen Fahrwerks über dem Einstellstand plaziert werden. Der Einstellstand ist ebenfalls so ausgelegt, dass Einstellungen an Fahrzeugen vorgenommen werden, welche ein sogenanntes "gesetztes" Fahrwerk aufweisen. Ferner wird eine mögliche Schrägstellung des Lenkrades mit Hilfe einer sogenannten Lenkradmesswaage erfasst und bei der Achseinstellung mit berücksichtigt.

Aus der DE 196 36 427 ist sind ein Verfahren und eine Vorrichtung zum Messen und Einstellen der Achsgeometrie eines Fahrzeugs bekannt. Dabei wird davon ausgegangen, dass die Vorder- und Hinterachse in getrennten Montagebereichen vormontiert werden. Bei dieser Vormontage erfolgt gleichzeitig eine Einstellung der Achsengeometrie, in dem die Lagen der Achsen bezüglich eines relativen Koordinatensystems erfasst werden, wobei das relative Koordinatensystem z.B. auf Arretierdorne am Fahrzeugboden bezogen ist. Die späteren Lagen der Räder am Fahrzeug können über die Lage der Bremsscheiben im relativen Koordinatensystem bestimmt werden. Die derart vormontiert und eingestellten Achsen werden schließlich am Boden des Fahrzeugs montiert.

Aus der US 5,731,870 sind ein Verfahren und eine Vorrichtung zur optischen Messung der Spur- und Sturzwerte an den Rädern eines Fahrzeugs bekannt. Hierzu wird das Fahrzeug mittels des eigenen Fahrwerks in einem Messstand plaziert. Auch dabei ist der Einstellstand so ausgelegt, dass Einstellungen an Fahrzeugen vorgenommen werden, welche ein sogenanntes "gesetztes" Fahrwerk aufweisen.

Schließlich ist aus der JP 10 15 76 53 ein Verfahren zur Einstellung der Achsengeomtrie von Fahrzeugen in einer Fertigungseinrichtung für Fahrzeuge bekannt. Die Erfassung und Einstellung der Geometriewerte der Achsen der Fahrzeuge erfolgt dabei im Anschluss die zur Herstellung der Fahrzeuge dienenden Montagevorrichtungen. Die Fahrzeuge werden dabei wiederum mit Hilfe von deren eigenen Fahrwerken an die zur Messung und Einstellung vorgesehenen Stationen herangeführt. Auch dabei ist der Einstellstand so ausgelegt, dass Einstellungen an Fahrzeugen vorgenommen werden, welche ein sogenanntes "gesetztes" Fahrwerk aufweisen.

Ein Nachteil derartiger bekannter Vorrichtung besteht darin, dass jedes Fahrzeug in einer aufwendigen manuellen Weise einzeln den zur Fahrwerkseinstellung dienenden Prüfständen zugeführt werden. Insbesondere in einer Fertigungseinrichtung für Automobile wird der zügige Produktionsfluss hierdurch derart beeinträchtigt, dass die Einstellung der Fahrwerksgeometrie in sogenannten Nacharbeitsplätzen vorgenommen werden muss. Dabei handelt es sich um werkstattmäßig ausgerüstete und organisierte Arbeitsplätze, bei denen die neu produzierten Fahrzeuge außerhalb der in Regel automatischen Fertigungseinrichtungen manuell eingestellt werden müssen.

Ein weiterer, wesentlicher Nachteil wird darin gesehen, dass die Fahrzeuge vor der Zuführung zur Messeinrichtung bereits auf deren Rädern abgesetzt worden sind. Um hierbei einen annähernd stationären, d.h. "gesetzten" Zustand zu erreichen, muss ein gewisses Setzverhalten abgewartet werden. Dabei setzen sich alle beweglichen und federnden Komponenten eines Fahrwerks unter Abbau von diversen Verspannungen. Bei Fahrzeugen, die bereits im Gebrauch sind, stellt dies kein Problem dar, da die Setzung des Fahrwerks auf Grund der Benutzung als abgeschlossen angesehen werden kann. Dagegen muss nach dem erstmaligen Absetzen eines neu produzierten Fahrzeugs in einer Fertigungseinrichtung ein gewisses Setzverhalten abgewartet werden. Auch hierdurch kann der zügige, insbesondere vollautomatische Produktionsfluss in einer Fertigungseinrichtung für Automobile erheblich beeinträchtigt werden.

Der Erfindung liegt die Aufgabe zugrunde, ein Verfahren zur Einstellung der Achsengeometrie eines Fahrzeugs anzugeben, welches besonders zur automatischen Ausführung mit Hilfe von Handhabungsautomaten insbesondere in vollautomatischen Fertigungseinrichtungen geeignet ist. Eine weitere Aufgabe liegt darin, eine zur Durchführung des Verfahrens besonders geeignete Einstellvorrichtung anzugeben. Schließlich liegt eine weitere Aufgabe der Erfindung darin, eine Fertigungslinie für Fahrzeuge anzugeben, welche ein besonders vorteilhaftes Zusammenspiel von Montageeinrichtungen und einer Einstellvorrichtung für die Achsengeometrie gemäß der Erfindung aufweist.

Diese Aufgaben werden gelöst mit dem angegebenen Verfahren, der angegebenen Einstellvorrichtung und der angegebenen Fertigungslinie. Unabhängige Ansprüche 1, 10, 32. Vorteilhafte weitere Ausgestaltungen sind in den jeweiligen Unteransprüchen enthalten.

Das erfindungsgemäße Verfahren zur Einstellung der Achsengeometrie betrifft Fahrzeuge, welche sich im Anschluss an dessen Herstellungsvorgang in einer hängenden Position befinden und ein fertig montiertes Fahrwerk aus mindestens einer Vorderachse und einer Hinterachse aufweisen.

Es ist besonders vorteilhaft für Fahrzeuge einsetzbar, welche nach Abschluß von deren Produktion noch nicht auf einer Fahrbahn abgesetzt worden sind. Dabei erfolgt die Einstellung erfindungsgemäß automatisch zumindest unter Berücksichtigung von Messwerten, welche an den am Fahrwerk des hängenden Fahrzeugs angebrachten Rädern automatisch erfasst werden.

Als Parameter, welche für die Achsengeometrie eines Fahrzeuges kennzeichnend sind, sind insbesondere die Spur und der Sturz, aber auch der sogenannte Nachlauf der Räder eines Fahrzeugs einzustellen. Bei den Rädern handelt es sich um komplett mit Reifen bestückten Felgen.

Die Erfindung wird an Hand der nachfolgend kurz angegebenen Figuren näher erläutert. Dabei zeigt
- Figur 1:: eine vorteilhafte Ausführung einer Einstellvorrichtung gemäß der Erfindung in Frontansicht,
- Figur 2:: einen ersten Ausschnitt der beispielhaften Einstellvorrichtung nach Figur 1 in einer Seitenansicht, und
- Figur 3:: einen zweiten Ausschnitt der beispielhaften Einstellvorrichtung nach den Figuren 1 und 2 in einer Seitenansicht.

Die Einstellung der Achsengeometrie des Fahrzeuges erfolgt gemäß der vorliegenden Erfindung während der laufenden Fahrzeugfertigung. Dabei wird das im Aufbau befindliche Fahrzeug mit Haltemitteln in einer hängenden Position zumindest gehalten. Vorteilhaft sind die Haltemittel in Form einer Hängefördervorrichtung ausgebildet, welche zusätzlich zur Halterung auch eine Ein- und Ausförderung von Fahrzeugen in und aus bevorzugt vollautomatischen Fertigungs- und Einstelleinrichtungen ermöglicht.

Die erfindungsgemäße der Achsengeometrie des Fahrzeuges erfolgt ferner in einem Bereich der Fahrzeugfertigung, in dem die wesentlichen Komponenten zumindest der Fahreinrichtung des Fahrzeuges bereits komplett montiert sind. Über entsprechende Montageeinrichtungen und Montageplätze sind somit das gesamte Fahrwerk des Fahrzeuges, zumindest bestehend aus Vorder- und Hinterachse, und das Antriebsaggregat des Fahrzeuges einschließlich einer gegebenenfalls erforderlichen Kardanwelle vollständig montiert. Ferner sind alle Achsen komplett mit Rädern ausgestattet. Bei einer bevorzugten Weiterbildung der Erfindung ist es vorteilhaft, dass zusätzlich zumindest auch das Lenkrad im Fahrerhaus montiert ist.

Unter Umständen können im relevanten Bereich der Produktionslinie auch weitere Komponenten, welche mit der Fahreinrichtung in Zusammenhang stehen, wie z.B. die Abgasanlage, Wärmeschutzbleche und Tanks des Fahrzeugs, bereits vormontiert sein.

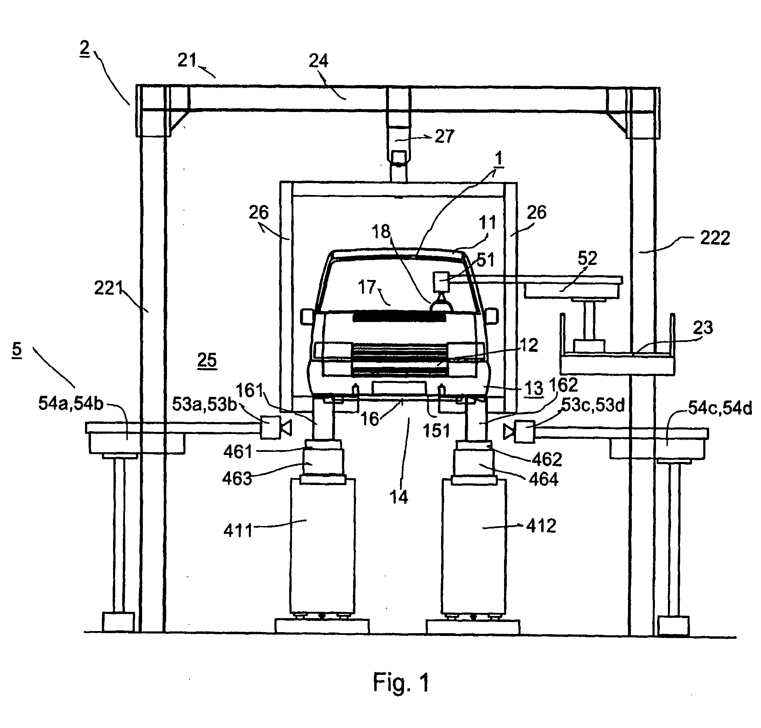

Figur 1 zeigt beispielhaft die Vorderansicht eines Fahrzeugs 1, welches einen entsprechenden Montagezustand aufweist. Dabei ist das Fahrzeug 1 zumindest bezüglich des äußeren Aufbaues der Karosserie 11 nahezu vollständig und bezüglich der Fahreinrichtungen 13, d.h. dem Fahrwerk 14 und dem Antriebsaggregat 12, bereits vollständig montiert. Bezüglich dem Aufbau des Innenraumes 17 kann sich das Fahrzeug 1 noch im Rohzustand befinden. Ferner sind alle Achsen des Fahrzeuges bereits in nahezu fahrfertiger Weise mit Rädern bestückt. Figur 1 zeigt die Vorderachse 151 mit dem rechten und dem linken Vorderrad 161,162. Gemäß einer vorteilhaften Weiterführung der Erfindung ist das in Figur 1 gezeigte Fahrzeug 1 im Innenraum 17 zumindest mit einem Lenkrad 18 ausgerüstet.

Das Fahrzeug 1 wird in der Montagelinie vorteilhaft über eine Fördervorrichtung gefördert, insbesondere eine Hängefördervorrichtung 2. Von dieser ist in Figur 1 beispielhaft eine einzelne, u-förmige und gestellartige Trageeinheit 21 von vorne dargestellt, welche aus einer rechten, linken Tragsäule 221,222 und einem oben verlaufenden Querträger 24 besteht. Die Hängefördervorrichtung 2 besteht aus einer Vielzahl von hintereinander angeordneten Trageeinheiten, welche quasi einen Fördertunnel 25 bilden. Das Fahrzeug 1 wird von einem Hängegestell 26 gehalten, welches in den Fahrzeugboden 16 eingreift und über eine, am Querträger 24 befestigten Laufschiene 27 hängend durch den Fördertunnel 25 hindurch gefördert wird. An einer Tragsäule 222 ist zusätzlich eine balkonartige Plattform 23 angebracht, deren Funktion nachfolgend noch näher erläutert werden wird.

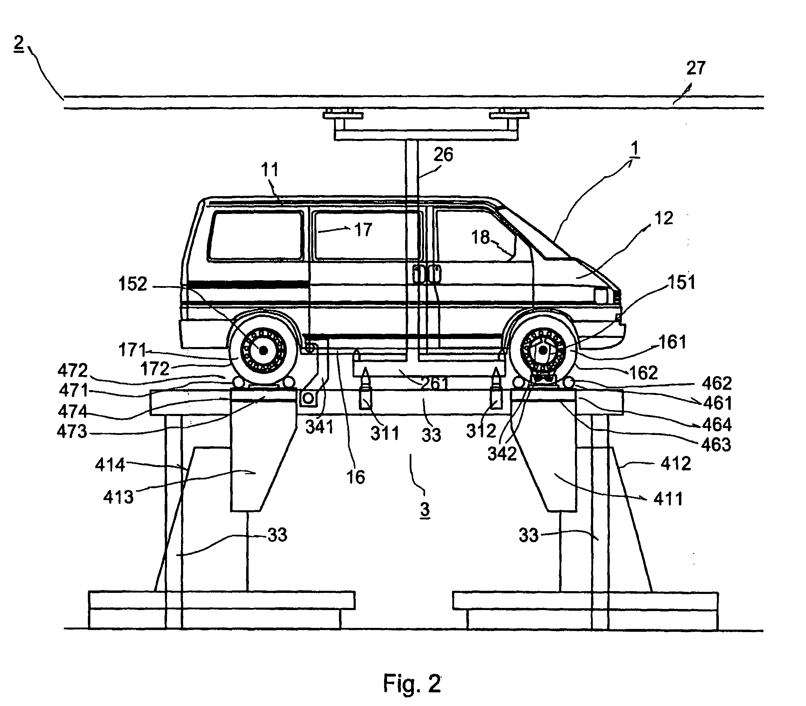

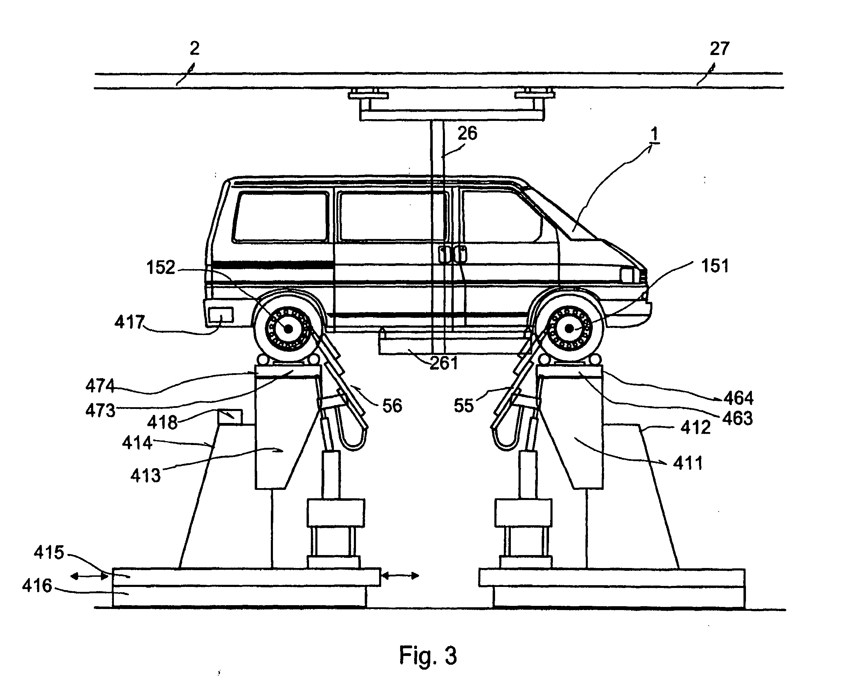

Im Beispiel der Figur 1 ist das Fahrzeug 1 gerade in eine Einstellvorrichtung für die Achsengeometrie eingefahren worden, welche auch als ein Fahrwerkeinstellstand bezeichnet werden kann. Deren Komponenten greifen vollautomatisch von unten an das Fahrzeug an, d.h. insbesondere auf den Fahrzeugboden 16 und die Räder 161,162,171,172. Dies wird nachfolgend mittels der Figuren 2 und 3 noch näher erläutert werden.

Eine Einstellvorrichtung gemäß der Erfindung kann auch Komponenten zur Datenverarbeitung enthalten, welche in Figur 1 aus Gründen der Übersichtlichkeit nicht dargestellt sind. Dabei kann es sich um bevorzugt berührungslos arbeitende Mittel zur Identifikation des gerade in der Einstellvorrichtung befindlichen individuellen Fahrzeugexemplars handeln. Derartige Mittel können auch als ein Identsystem bezeichnet werden und verarbeiten Daten, welche z.B. in einem, am Fahrzeug 1 bzw. am Hängegestell 26 befindlichen mobilen Datenspeicher gespeichert sind. Diese Daten können im einem Leitsystem erfasst, verarbeitet und z.B. an einem Display angezeigt werden. Dieser Daten können z.B. erforderlich sein, um die für eine automatische Einstellung der Achsengeometrie erforderlichen Sollwerte bereitzustellen, welche typspezifischen Schwankungen unterliegen können. So können auch bei baugleichen Fahrzeugen z.B. abhängig von unterschiedlichen zukünftigen Nutzungen des Fahrzeuges, z.B. als ein Lastentransporter oder ein Personentransporter, d.h. abhängig von der zukünftigen Nutzlast, u.U. unterschiedliche Einstellungen bei der Achsengeometrie erforderlich sein. Ferner können auch unterschiedliche Radstände und Radgrößen angepaßte Einstellwerte für die jeweilige Achsengeometrie erfordern.

Figur 2 zeigt eine Seitenansicht der beispielhaften Einstellvorrichtung von Figur 1. Bevor die eigentliche Einstellung der Achsengeometrie erfolgen kann, müssen verschiedene Vorbereitungen ausgeführt werden. Diese bestehen aus den folgenden Schritten :

In einem ersten Schritt werden das Fahrzeug 1 und die Komponenten der erfindungsgemäßen Einstellvorrichtung zueinander ausgerichtet und anschließend fixiert, d.h. starr gehalten. Hierzu weist die erfindungsgemäße Einstellvorrichtung vorteilhaft eine Zentriervorrichtung 3 auf. Diese weist im Beispiel der Figur 2 Fixierdorne 311,312 auf, die von unten über ein Hubgestell 33 angefahren werden und in einen am Fahrzeugboden 16 befindlichen unterer Querträger 261 der Hängevorrichtung 26 oder direkt in den Fahrzeugboden eingreifen. Ein Fahrzeug 1 ist nun positionsgenau relativ zur Hängefördervorrichtung 2 in der erfindungsgemäßen Einstellvorrichtung platziert. Ferner wird das Fahrzeug mechanisch festgehalten. Dieser Vorgang kann auch als "abstecken" bezeichnet werden.

In einem zweiten Schritt muß die Karosserie 11 gegen ein versehentliches Ausheben aus der Hängevorrichtung 26 gesichert werden. Im Beispiel der Figur 2 sind hierzu Niederhalteeinrichtungen vorgesehen, welche z.B. am Hubgestell 33 angebracht sind. Eine erste, z.B. bügelförmige Klemmeinrichtung 341 greift am Fahrzeugboden 16 in Bereich der Hinterachse 152 ein. Eine zweite, z.B. klammerförmige Klemmeinrichtung 342 greift am Fahrzeugboden 16 in Bereich der Vorderachse 151 ein.

Ein möglicher, weiterer vorbereitender Schritt kann dazu dienen, eventuell im Fahrwerk vorhandene Verspannungen, die durch die Montage des Fahrzeugs verursacht werden können, zu beseitigen. Diese Ausführung hat den Vorteil, dass die Erfassung der Messwerte, welche für die nachfolgende automatische Einstellung der Achsengeometrie gemäß der Erfindung erforderlich sind, mit einer gesteigerten Genauigkeit erfolgen kann.

Bei dem in den Figuren 1 bis 3 dargestellten Ausführungsbeispiel sind hierzu für die Räder 161,162 der Vorderachse 151 und die Räder 171,172 der Hinterachse 152 des Fahrzeugs 1 Laufrolleneinrichtungen 461,462,471,472 vorhanden, welche mit Hilfe von Hubeinheiten 411,412,413,414 von unten angefahren werden. Die Laufrolleneinrichtungen 461,462,471,472 sind auf zumindest horizontal frei beweglichen Schwimmplatten 463,464, 473,474 gelagert.

Diese Elemente werden nun mit Hilfe der Hubeinheiten 411,412, 413,414 von unten so stark gegen die Räder 161,162,171,172 hochgefahren, dass das Fahrwerk, d.h. die Achsen und Räder des Fahrzeugs, annähernd eine sogenannte "Konstruktionslage" erreichen. Dieser Vorgang kann auch als "einfedern" bezeichnet werden.

Vorteilhaft werden anschließend die auf den Schwimmplatten gelagerten Laufrolleneinrichtungen über die Hubeinheiten wieder so weit abgesenkt, dass das Fahrwerk des Fahrzeugs, d.h. dessen Achsen und Räder, annähernd eine sogenannte "Leergewichtslage" einnehmen. Diese entspricht in etwa einer Lage von Achse und Rädern, die dann auftritt, wenn das Fahrzeug auf einem Untergrund abgestellt wäre und mit seinem Eigengewicht, d.h. dem Leergewicht, die Achsen und Räder belasten würde.

Es ist vorteilhaft, wenn zumindest die Erfassung der für die automatische Einstellung der Achsengeometrie gemäß der Erfindung erforderlichen Messwerte vorgenommen wird, wenn Räder und Achsen diese "Leergewichtslage" einnehmen.

Besonders vorteilhaft erfolgt die Erfassung der für die Einstellung der Achsengeometrie erforderlichen Messwerte somit an den am fertig montierten Fahrwerk des Fahrzeugs angebrachten und in der "Leergewichtslage" befindlichen Rädern. Dies hat eine besondere hohe Mess- und Einstellgenauigkeit zur Folge, da auch die Räder und damit eventuell verbundene Maßtoleranzen mit in die Messung einbezogen werden. Ferner entfällt die Gefahr, daß die Einstellung der Achsengeometrie somit nicht mehr durch irgendwelche nachfolgende Montageschritte, wie z.B. eine Reifenmontage, verändert wird. Vorteilhaft werden als Messwerte die Werte von Spur und Sturz an der Vorderachse 151 und / oder der Hinterachse 152 automatisch erfasst.

Bei einer weiteren, besonders vorteilhaften Ausführung des erfindungsgemäßen Verfahrens werden die bevorzugt in der Leergewichtslage befindlichen Räder des Fahrzeuges zum Zwecke der Messung in Drehungen versetzt. Bevorzugt die Werte von Spur und Sturz werden somit am drehenden Rad erfasst. Hiermit können weitere Störgrößen, insbesondere fertigungsbedingte Unwuchten an Rad und Felge, erfaßt und bei der Einstellung der Achsengeometrie mit kompensiert werden.

Im Beispiel der Figur 2 können die Räder 161,162,171,172 über die mit den Hubeinheiten 411,412,413,414 von unten angefahrenen Laufrolleneinrichtungen 461,462,471, 472 und Schwimmplatten 463,464,473,474 in Drehung versetzt werden. Bevorzugt wird die Messwertaufnahme erst nach einer vollständigen Drehung der Räder gestartet.

Vorteilhaft wird zur Erfassung der Messwerte, insbesondere von Spur und Sturz, während mindestens einer vollständigen Umdrehung ein Hochpunkt eines Rades erfasst. Dieser stellt ein auf der Oberfläche eines Reifens liegender Punkt dar, in dem das Rad eine maximale Wölbung aufweist. Wird für die Erfassung der Messwerte pro Rad eine Abstandsmesseinrichtung eingesetzt, so liegt ein Hochpunkt dann vor, wenn ein minimaler Abstandswert zwischen dem Rad und der Abstandsmesseinrichtung erfasst werden kann. Pro Umdrehung eines Rades wird mindesten ein derartiger Hochpunkt gesucht und quasi als ein Referenzpunkt für die weitere Erfassung der die Achsengeometrie und deren aktuelle Einstellung kennzeichnenden Messwerte verwendet. Besonders vorteilhaft erfolgt die Messwertaufnahme an Vorder- und Hinterachse in Form einer sogenannten Vielpunktmessung.

Diese kann wie folgt beschrieben werden : Um die Lage der Rotationsachse eines Rades und damit deren Spur- und Sturzwinkel zu bestimmen, wird diejenige Ebene ermittelt, in der das Rad rotiert. Diese Ebene steht senkrecht zur Rotationsachse des Rades und kann messtechnisch erfasst werden, indem mindestens drei, nicht alle auf einer Geraden liegende Punkte dieser Ebene erfasst werden. Die Messung dieser drei Punkte erfolgt vorteilhaft durch eine sogenannte optische Triangulation. Pro Messpunkt wird hierzu ein Laserstrahl auf die Reifenwand projiziert. Eine Videokamera nimmt das vom Reifen zurückgestreute Laserlicht unter einem festen Winkel auf. Ein bildverarbeitender Computer ermittelt aus dem Videobild die Position des Lichtpunktes auf dem Reifen und damit seine Koordinaten im Raum. Zur Erhöhung der Genauigkeit kann statt eines punktförmigen Laserstrahls auch eine Laserlinie verwendet werden. Aus deren Koordinaten wird ein Fixpunkt ermittelt, der als Stützpunkt zur Bestimmung der Radebene dienen kann. Der Laser, die Videokamera und der Bildverarbeitungsrechner können sich in jedem einzelnen Abstandssensors befinden. Diese entsprechen den in Figur 1 mit den Bezugszeichen 53a, 53b, 53c und 53d versehenen Elementen. Um Fehler durch Unebenheiten auf der Reifenwand auszuschließen, werden die Messwerte vorzugsweise am drehenden Rad erfasst und über eine volle Umdrehung gemittelt. Da bei einer Umdrehung des Rades alle Unebenheiten genau einmal an jedem der drei Sensoren vorbeilaufen, wird jeder der drei Mittelwerte von jeder Unebenheit gleichermaßen beeinflusst. Die Ebene durch diese drei Mittelwerte repräsentiert somit genau die Drehachse eines Rades. Aus den Drehachsen aller vier Räder eines Fahrzeugs können deren Koordinaten und Neigungswinkel und damit die gesamte Achsgeometrie berechnet werden. Es ist dann ein Soll- und Istwertvergleich möglich, so dass bei Vorliegen von Abweichungen Korrekturwerte abgeleitet werden können.

Für eine Messwerterfassung wird die Schwimmung der Schwimmplatten bei einer Radberührung freigegeben. Die Schwimmplatten übertragen dann auf Grund ihrer Gestaltung während des Einfeder- und Messvorganges neben der simulierten Radaufstandskraft keine weiteren Kräfte auf das jeweilige Rad.

Bei einer weiteren Ausführung des erfindungsgemäßen Verfahrens sind zusätzliche Mittel vorhanden, mit denen eine mögliche Schrägstellung des Lenkrades automatisch erfasst werden kann. Hiermit ist es möglich, einen weiteren Messwert zu bestimmen, der bei der Einstellung der Achsengeometrie zusätzlich berücksichtigt werden kann. Hiermit können Schrägstellungen des Lenkrades insbesondere bei der Einstellung der Spur des Fahrwerkes kompensiert werden, bzw. bewirken zumindest keine Einstellungsfehler. Zur Erfassung der Lenkradstellung kann bevorzugt eine optische Messeinrichtung 51 eingesetzt werden. Die Halterung der Messeinrichtung 51 kann am Kragarm einer automatischen Handhabungseinrichtung 52 erfolgen, der für den Messvorgang z.B. durch ein geöffnetes Seitenfenster in den Innenraum 17 des Fahrzeugs einfährt. Im Beispiel der Figur 2 ist die Handhabungseinrichtung 52 auf dem Podest 2 platziert.

Besonders vorteilhaft wird eine erfasste Schrägstellung des Lenkrades durch einen bevorzugt automatischen Eingriff z.B. auf die dazugehörige Achse ausgeglichen, indem z.B. automatische Handhabungseinrichtungen auf die Spurstange des Fahrzeuges so lange einwirken, bis das Lenkrad keine Schrägstellung mehr aufweist. Dabei kann z.B. von der optischen Messeinrichtung 51 die während einer derartigen Korrektur durch Drehung auftretende Lageänderung des Lenkrades erfasst und in einen weiteren Messwert umgesetzt werden. Dieser Messwert kann schließlich bei der automatischen Einstellung der Achsengeometrie zusätzlich berücksichtigt werden.

Vorteilhaft ist bei der erfindungsgemäßen Einstellvorrichtung die optische Messeinrichtung 51 in Form einer Einheit ausgeführt, welche automatisch insbesondere digitale Bilddaten zumindest des Lenkrades 18 des Fahrzeugs 1 erzeugt, z.B. eine digitale Videokamera. Diese werden einer nicht dargestellten Auswerteeinrichtung zugeführt, z.B. einem digitalen Rechner, die aus den Bilddaten einen Korrekturwert automatisch generieren, der eine mögliche Schrägstellung des Lenkrades kennzeichnet. Dieser wird wiederum bei der automatischen Einstellung von Spur und/oder Sturz des Fahrwerks mit berücksichtigt.

In der Praxis konnen vorteilhaft als Messwerte Einzelspur- und Gesamtspurwerte unter Berücksichtigung der Laufrichtung der Hinterräder gemessen werden, sowie Einzelsturzwerte und die Differenz zwischen dem linken und rechten Rad einer Achse. Ferner kann gegebenenfalls auch der sogenannte Nachlauf von Rädern erfasst werden.

Zur Erfassung von derartigen Messwerten kann besonders vorteilhaft mindestens ein optisches Messsystem eingesetzt werden. Als ein optisches Messsystem eignet sich z.B. eine Lasermesseinrichtung. Hiermit können auf dem Wege einer Entfernungsmessung insbesondere die während mindestens einer Umdrehung eines Rades auftretenden Schwankungen erfasst werden. Aus diesen Schwankungen können die entsprechenden Messwerte für die Achsengeometrie und besondere Korrekturwerte für deren exakte Einstellung ermittelt werden. In Figur 1 sind als ein optisches Messsystem beispielhaft Lasermessköpfe 53a bzw. 53c dargestellt, welche auf einer automatischen Handhabungseinrichtung 54a bzw. 54c montiert und dem linken Rad 161 bzw. dem rechten Rad 162 an der Vorderachse 151 des Fahrzeugs zugeordnet sind. Auch den Rädern an der Hinterachse können entsprechende Elemente zugeordnet sein. Diese liegen in der Figur 1 in einer hinter den Elementen 53a,54a bzw. 53c,54c platzierten Ebene. So ist dem linken Rad an der Hinterachse ein Lasermesskopf 53b an einer Handhabungseinrichtung 54b und dem rechten Rad an der Hinterachse ein Lasermesskopf 53d an einer Handhabungseinrichtung 54d zugeordnet. Die davon erfassten Messwerte werden an die Auswerteeinrichtung weitergeleitet. Diese vergleicht insbesondere die gemessenen Spurund Sturzwerte mit vorgegebenen Sollwerten. Abweichung zwischen Ist- und Sollwerten werden als Einstellwerte für eine folgende, bevorzugt automatische Einstellung verwendet.

Die Einstellung selbst erfolgt am stehenden Rad. Die erfindungsgemäße Einstellvorrichtung weist hierzu mindestens eine automatische Handhabungseinrichtung auf. Im Beispiel der Figur 3 sind für Vorder- und Hinterachse 151,152 getrennte Handhabungseinrichtungen 55,56 vorgesehen, welche am linken und rechten Rad der jeweiligen Achse die jeweiligen Einstellpunkte anfahren. Die Spureinstellung erfolgt automatisch so lange, bis die Abweichung vom Sollwert innerhalb der vorgegebenen Toleranz liegt.

Nach einer erfolgten Einstellung wird entweder durch eine weitere Handhabungseinrichtung oder bevorzugt durch die gleiche Handhabungseinrichtung 55,56 vorteilhaft auch eine automatische Aktivierung von Sicherungsmitteln vorgenommen, die sich am Fahrwerk des Fahrzeugs befinden. Hierbei kann es sich um Konterelemente handeln, insbesondere um Muttern, die bereits an der Spurstange angebracht sind. Vorteilhaft begrenzt die Handhabungseinrichtung die bei der Aktivierung der Sicherungsmittel am Fahrwerk aufzubringenden Kräfte automatisch. Insbesondere werden die bei einer Aktivierung von Konterelementen an den Spurstangen aufzubringenden Drehmomente begrenzt.

Nach der Konterung der Spurstange ist die Einstellung der Achsengeometrie des in der Einstellvorrichtung befindlichen Fahrzeuges abgeschlossen. Die Einstellvorrichtung kann nun freigegeben und das Fahrzeug 1 über die Hängefördervorrichtung 2 weiterbefördert werden. Hierzu werden die Schwimmplatten 463,464,473,474 über die entsprechenden Hubeinheiten 411,412,413,414 abgesenkt und arretiert. Die Messeinrichtung 5, d.h. insbesondere die optische Messeinrichtung 51 und die Lasermessköpfe 53 sowie die dazugehörigen Handhabungseinrichtungen 52,54 werden in Grundstellung zurückgefahren. Nun kann die Hängevorrichtung 2 freigegeben und das Fahrzeug über das Hängegestell 26 an den Schienen 27 zu weiteren Montageeinrichtungen der jeweiligen Fertigungslinie transportiert werden.

Bei einer weiteren Ausführungsform der Erfindung weist die erfindungsgemäße automatische Einstellvorrichtung desweiteren automatische Verfahrmittel zumindest für die Hubeinheiten auf. Gegebenenfalls können auch automatische Handhabungseinlichtungen über die verfahrmittel positionierbar sein. Mit den Verfahrmitteln ist zumindest die Position der Hubeinheiten insbesondere an den aktuellen Abstand zwischen Vorder- und Hinterachse des Fahrwerkes eines von der Hängefördervorrichtung und der Zentriervorrichtung gehaltenen und fixierten Fahrzeugs selbsttätig anpassbar. Vorteilhaft kann zusätzlich mindestens eine Leseeinrichtung für mindestens einen Datenträger vorhanden sein. In dem Datenträger ist der aktuelle Abstand zwischen der Vorder- und der Hinterachse eines aktuell in der Einstellvorrichtung befindlichen Fahrzeugs enthalten. Dieser Wert kann von der Leseeinrichtung aus dem Datenträger ausgelesen und zur Ansteuerung der automatischen Verfahrmittel für die Hubeinheiten verwendet werden. Vorteilhaft ist der Datenträger unmittelbar am Fahrzeug oder an der Hängefördervorrichtung 2 angebracht.

Bei dem in der Figur 3 dargestellten Beispiel ist ein derartiges automatisches Verfahrmittel 415 für die Hubeinheit 414 unter dem rechten Rad an der Hinterachse 152 des Fahrzeugs 1 vorhanden. Hiermit ist die Position der Hubeinheit 414 insbesondere an den aktuellen Abstand zwischen Vorder- und Hinterachse 151,152 des Fahrwerkes 14 des von der Hängefördervorrichtung 2 und der Zentriervorrichtung 3 gehaltenen und fixierten Fahrzeugs 1 selbsttätig anpassbar. Die Verfahrmittel 415 sind auf einer Plattform 415 gelagert und tragen im Beispiel der Figur 3 zusätzlich eine zur Einstellung der Achsengeometrie an der Hinterachse 152 dienende automatische Handhabungseinrichtung 56. Vorteilhaft ist zumindest eine auf das in Figur 3 nicht sichtbare linke Hinterrad einwirkende Hubeinrichtung ebenfalls über weitere automatische Verfahrmittel gelagert.

Vorteilhaft weist die Einstellvorrichtung mindestens eine Leseeinrichtung 418 auf, welche beispielhaft an der Hubeinheit 413 für die Hinterachse 152 angebracht ist. Diese Leseeinrichtung 418 kann bevorzugt auf berührungslose Weise den Inhalt von Datenträgern 417 auslesen, in denen der aktuelle Abstand zwischen der Vorder- und Hinterachse 151, 152 des Fahrwerkes 14 des Fahrzeugs 1 eingespeichert ist. Im Beispiel der Figur 3 ist der Datenträger 417 an dem Fahrzeug 1 angebracht.

Die automatischen Verfahrmittel weisen den besonderen Vorteil auf, dass die Position der Hubeinheiten insbesondere an der Hinterachse eines Fahrzeugs automatisch auf den aktuellen Radstand des Fahrzeugs anpassbar ist.

Die erfindungsgemäße Einstellvorrichtung für die Achsengeometrie eines Fahrzeugs hat den besonderen Vorteil, daß diese in eine bevorzugt vollautomatische Fertigungslinie für Fahrzeuge integrierbar ist. Dabei ist die erfindungsgemäße Einstellvorrichtung für die Achsengeometrie des Fahrzeugs im Anschluß an zumindest zur Anbringung des Fahrwerkes und der Räder des Fahrzeugs dienende Montageeinrichtungen integriert. Vorteilhaft ist die automatische Einstellvorrichtung im Anschluß an eine zur Anbringung des Lenkrades des Fahrzeugs dienende Montageeinrichtungen integriert. Dort kann das Lenkrad auch manuell angebracht werden.

## Patentansprüche

1. Verfahren zur Einstellung der Achsengeometrie eines Fahrzeugs (1), welches sich im Anschluss an dessen Herstellungsvorgang in einer hängenden Position (2) befindet und ein fertig montiertes Fahrwerk (14) aus mindestens einer Vorderachse (151) und einer Hinterachse (152) aufweist, wobei die Einstellung automatisch zumindest unter Berücksichtigung von Messwerten erfolgt, welche an den am Fahrwerk des hängenden Fahrzeugs (1) angebrachten Rädern (161,162,171,172) automatisch erfasst werden.

2. Verfahren nach Anspruch 1, **dadurch gekennzeichnet , dass**
a) das Fahrzeugs (1) niedergehalten wird,
b) eine externe Gegenkraft auf das Fahrwerk (14) des in einer hängenden Position (2) befindlichen Fahrzeugs (1), insbesondere über dessen Räder (161,162,171,172), ausgeübt wird, und
c) das Fahrwerk (14) des Fahrzeugs (1) mittels der externen Gegenkraft bis annähernd in eine Leergewichtslage eingefedert wird.

3. Verfahren nach Anspruch 1, **dadurch gekennzeichnet , dass**
a) das Fahrzeugs (1) niedergehalten wird,
b) eine externe Gegenkraft auf das Fahrwerk (14) des in einer hängenden Position (2) befindlichen Fahrzeugs (1), insbesondere über dessen Räder (161,162,171,172), ausgeübt wird,
c) das Fahrwerk (14) des Fahrzeugs (1) mittels der externen Gegenkraft bis annähernd in eine Konstruktionslage eingefedert wird, und
d) das Fahrwerk (14) des Fahrzeugs (1) anschließend bis in eine Leergewichtslage abgesenkt wird.

4. Verfahren nach einem der vorangegangenen Ansprüchen, **dadurch gekennzeichnet , dass** als Messwerte die Werte von Spur und/oder Sturz an Vorderachse (151) und/oder Hinterachse (152) automatisch erfaßt werden.

5. Verfahren nach einem der vorangegangenen Ansprüchen, **dadurch gekennzeichnet, dass** mindestens ein Rad (161,162,171,172) des in einer hängenden Position (2) befindlichen Fahrzeugs (1) in Drehung versetzt wird und die Messwerte am drehenden Rad erfaßt werden.

6. Verfahren wird nach einem der vorangegangenen Ansprüche, **dadurch gekennzeichnet , dass** zur Erfassung der Messwerte während mindestens einer vollständigen Umdrehung des Rades (161,162,171,172) mindestens ein Hochpunkt des Rades als eine Art Referenzpunkt erfasst wird.

7. Verfahren nach einem der vorangegangenen Ansprüchen, **dadurch gekennzeichnet , dass** automatisch zumindest ein weiterer Messwert erfasst wird, der ein kennzeichnendes Maß für eine mögliche Schrägstellung des Lenkrades (18) darstellt, und die Einstellung der Achsengeometrie unter zusätzlicher Berücksichtigung dieses weiteren Messwertes erfolgt.

8. Verfahren nach einem der vorangegangenen Ansprüchen, **dadurch gekennzeichnet , dass** der zumindest eine weitere Messwert für eine mögliche Schrägstellung des Lenkrades (18) auf optische Weise erfasst wird.

9. Verfahren nach einem der vorangegangenen Ansprüchen, **dadurch gekennzeichnet, dass**
a) eine Schrägstellung des Lenkrades (18) automatisch korrigiert wird, und
b) ein kennzeichnender Messwert für die ursprüngliche Schrägstellung des Lenkrades (18) aus mindestens einer Lageänderung abgeleitet wird, die bei der Korrektur der Schrägstellung des Lenkrades erfasst wird.

10. Einstellvorrichtung zur Durchführung des Verfahrens nach einem der vorangegangenen Ansprüche 1 bis 9, **gekennzeichnet durch**
a) Mittel (2;21,24,27) zur Halterung eines Fahrzeugs (1) in einer hängenden Position, und
b) mindestens eine automatische Messeinrichtung (53a,53b, 53c,53d) zur automatischen Erfassung von Messwerten an mindestens einem Rad (161,162,171,172) eines in einer hängenden Position (2) befindlichen Fahrzeugs (1) mit fertig montiertem Fahrwerk (14).

11. Einstellvorrichtung nach Anspruch 10, **gekennzeichnet durch** mindestens ein optisches Messsystem, insbesondere einen Laser-Messkopf (53a,53b,53c,53d), als Messeinrichtung zur automatischen Erfassung der Messwert an mindestens einem Rad (161,162,171,172) eines Fahrzeugs (1).

12. Einstellvorrichtung nach Anspruch 10 oder 11, **gekennzeichnet durch** mindestens eine erste, einem Rad bzw. einer Achse des Fahrzeugs zugeordnete automatische Handhabungseinrichtung (55,56) für die Justierung der Achsengeometrie eines Fahrzeugs (1), insbesondere für die zur Einstellung von Spur und/oder Sturz an Vorderachse (151) und/oder Hinterachse (152) dienenden Mittel am Fahrwerk (14) eines Fahrzeugs (1).

13. Einstellvorrichtung nach einem der vorangegangenen Ansprüche 9 bis 11, **gekennzeichnet durch** Messmittel (51,52) zur automatischen Generierung eines Messwertes, der ein kennzeichnendes Maß für eine mögliche Schrägstellung des Lenkrades (18) darstellt.

14. Einstellvorrichtung nach Anspruch 13, **dadurch gekennzeichnet, dass** die Messmittel (51,52) eine optische Erfassungseinheit (51) enthalten.

15. Einstellvorrichtung nach Anspruch 14, **dadurch gekennzeichnet , dass**
a) Einstellmittel zur automatischen Korrektur einer Schrägstellung des Lenkrades (18) vorhanden sind, und
b) die Messmittel (51) den die ursprüngliche Schrägstellung des Lenkrades (18) kennzeichnenden Messwert aus mindestens einer Lageänderung ableiten, die bei der automatischen Korrektur der Schrägstellung des Lenkrades (18) auftritt.

16. Einstellvorrichtung nach Anspruch 15, **dadurch gekennzeichnet, dass** die Messmittel (51) die Lageänderung aus einem Drehwinkel des Lenkrades (18) ableiten, der bei der automatischen Korrektur der Schrägstellung des Lenkrades (18) auftritt.

17. Einstellvorrichtung nach Anspruch 14, 15 oder 16, **dadurch gekennzeichnet , dass** die Messmittel (51) zur automatischen Generierung eines, eine mögliche Schrägstellung des Lenkrades (18) kennzeichnenden Messwertes aufweist
a) eine Einheit (51) zur automatische Generierung von Bilddaten zumindest des Lenkrades (18) des Fahrzeugs (1), z.B. eine digitale Videokamera, und
b) Auswertemittel, welche aus den Bilddaten einen, eine mögliche Schrägstellung des Lenkrades (18) kennzeichnenden Messwert automatisch generieren.

18. Einstellvorrichtung nach einem der Ansprüche 14 bis 17, **gekennzeichnet durch** eine zweite Handhabungseinrichtung (52), welche die Messmittel (51) automatisch in das Innere (17) eines Fahrzeuges (1) einfährt, insbesondere in das Fahrerhaus.

19. Einstellvorrichtung nach einem der Ansprüche 11 bis 18, **gekennzeichnet durch** eine dritte Handhabungseinrichtung, welche Sicherungsmittel am Fahrwerk (14) eines Fahrzeugs, insbesondere Konterelemente an den Spurstangen, automatisch aktiviert.

20. Einstellvorrichtung nach Anspruch 19, **dadurch gekennzeichnet, dass** die dritte Handhabungseinrichtung die bei der Aktivierung der Sicherungsmittel am Fahrwerk aufzubringenden Kräfte automatisch begrenzt, insbesondere die bei einer Aktivierung von Konterelementen an den Spurstangen aufzubringenden Drehmomente.

21. Einstellvorrichtung nach einem der Ansprüche 11 bis 18, **dadurch gekennzeichnet, dass** die erste Handhabungseinrichtung (55,56) Sicherungsmittel am Fahrwerk (14) eines Fahrzeugs, insbesondere Konterelemente an den Spurstangen, automatisch aktiviert.

22. Einstellvorrichtung nach Anspruch 21, **dadurch gekennzeichnet, dass** die erste Handhabungseinrichtung die bei der Aktivierung der Sicherungsmittel am Fahrwerk aufzubringenden Kräfte automatisch begrenzt, insbesondere die bei einer Aktivierung von Konterelementen an den Spurstangen aufzubringenden Drehmomente.

23. Einstellvorrichtung nach einem der Ansprüche 11 bis 22, **gekennzeichnet durch** eine automatische Zentriervorrichtung (2) für ein Fahrzeug (1), welche dieses für eine automatische Einstellung von deren Achsengeometrie in einer hängenden Position positionsgenau ausrichtet und fixiert.

24. Einstellvorrichtung nach einem der Ansprüche 11 bis 23, **gekennzeichnet durch**
a) Mittel (21,221,222,24,27,26) zur Niederhaltung des hängenden Fahrzeugs (1), und
b) Hubeinheiten (411,412,413,414), welche zur Erzeugung einer externe Gegenkraft von unten an das Fahrwerk (14) des in einer hängenden Position (2) befindlichen Fahrzeugs (1), insbesondere an dessen Räder (161,162,171, 172), eingefahren werden.

25. Einstellvorrichtung nach Anspruch 24, **dadurch gekennzeichnet, dass** die Hubeinheiten (411,412,413,414) Laufrolleneinrichtungen (461,462,471,472) für die Räder (161,162,171,172) eines Fahrzeuges (1) aufweisen.

26. Einstellvorrichtung nach Anspruch 25, **dadurch gekennzeichnet, dass** die Laufrolleneinrichtungen (461,462, 471,472) die Räder (161,162,171,172) eines Fahrzeuges (1) antreiben.

27. Einstellvorrichtung nach Anspruch 25 oder 26, **dadurch gekennzeichnet, dass** die Laufrolleneinrichtungen (461,462,471,472) über Schwimmplatten (463,464,473, 474) auf den Hubeinheiten (411,412,413,414) gelagert sind.

28. Einstellvorrichtung nach einem der Ansprüche 24 bis 27, **dadurch gekennzeichnet , dass** die Hubeinheiten (411, 412,413,414) das Fahrwerk (14) eines in einer hängenden Position befindlichen Fahrzeuges (1) zumindest in eine Leergewichtslage einfahren.

29. Einstellvorrichtung nach einem der Ansprüche 24 bis Anspruch 28, **gekennzeichnet durch** automatische Verfahrmittel (416) zumindest für Hubeinheiten (411,412,413, 414), wodurch diese an die Lage der Räder am Fahrwerk (14) eines Fahrzeugs (1) selbsttätig anpassbar sind.

30. Einstellvorrichtung nach einem der Ansprüche 24 bis Anspruch 29, **gekennzeichnet durch** automatische Verfahrmittel (416) zumindest für Hubeinheiten (411,412,413, 414), wodurch diese an den Abstand zwischen Vorder- und Hinterachse (151,152) des Fahrwerkes (14) eines Fahrzeugs (1) selbsttätig anpassbar sind.

31. Einstellvorrichtung nach Anspruch 29 oder 30, **gekennzeichnet durch** mindestens eine Leseeinrichtung (418) für Datenträger (417), welche den aktuellen Abstand zwischen den Rädern und/oder der Vorder- und Hinterachse (151,152) des Fahrwerkes (14) eines Fahrzeugs (1) aus einem Datenträger (417) ausliest, der insbesondere unmittelbar an einem Fahrzeug (1) angebracht ist, und hiermit die automatischen Verfahrmitteln (416) für Hubeinheiten (411,412,413,414) ansteuert.

32. Fertigungslinie für Fahrzeuge mit Fahrzeugmontageeinrichtungen und einer automatischen Einstellvorrichtung (53a,53b, 53c,53d,55,56) für die Achsengeometrie eines Fahrzeugs (1) nach einem der Ansprüche 10 bis 31, **gekennzeichnet durch** eine Hängefördervorrichtung (2) für Fahrzeuge (1), wodurch Fahrzeuge (1) in eine automatische Einstellvorrichtung für die Achsengeometrie eingefördert und nach erfolgter automatische Einstellung der Achsengeometrie wieder ausgefördert werden.

33. Fertigungslinie nach Anspruch 32, **dadurch gekennzeichnet, dass** die automatische Einstellvorrichtung (53a,53b,53c,53d,55,56) in die Fertigungslinie im Anschluss an Montageeinrichtungen integriert ist, die zumindest zur Anbringung des Fahrwerkes (14) und der Räder (161,162, 171,172) des Fahrzeugs (1) dienen.

34. Fertigungslinie nach Anspruch 32 oder 33, **dadurch gekennzeichnet , dass** die automatische Einstellvorrichtung für die Achsengeometrie eines Fahrzeugs zumindest im Anschluss an eine Montageeinrichtungen integriert ist, die zur Anbringung des Lenkrades (18) des Fahrzeugs (1) dient.

## Claims

1. Method for adjusting the axle geometry of a vehicle (1) which, following its production operations, is in a suspended position (2) and a fully assembled chassis (14), comprising at least a front axle (151) and a rear axle (152), by which the adjustment is effected automatically, taking into account, at least, measured values which are automatically recorded from the wheels (161, 162, 171, 172) attached to the chassis of the suspended vehicle (1).

2. Method according to Claim 1, **characterized in that**
(a) the vehicle (1) is held down,
(b) an external counterforce is exercised on the chassis (14) of the vehicle (1) which is in a suspended position (2), in particular onto its wheels (161, 162, 171, 172), and
(c) the chassis (14) of the vehicle (1) is compressed by the external counterforce to approximately the empty weight position.

3. Method in accordance with Claim 1, **characterized in that**
(a) the vehicle (1) is held down,
(b) an external counterforce is exercised on the chassis (14) of the vehicle (1) which is in a suspended position (2), in particular onto its wheels (161, 162, 171, 172),
(c) the chassis (14) of the vehicle (1) is compressed by the external counterforce to approximately a design position, and
(d) the chassis (14) of the vehicle (1) is then lowered down to an empty weight position.

4. Method according to one of the preceding Claims,
**characterized in that** the values of the track and/or inclination are automatically recorded as measured values for the front axle (151) and/or the rear axle (152).

5. Method according to one of the preceding Claims,
**characterized in that** at least one wheel (161, 162, 171, 172) of the vehicle (1) which is in a suspended position (2) is set in rotation, and the measured values are recorded from the rotating wheel.

6. Method according to one of the preceding Claims,
**characterized in that** for the purpose of recording the measured values at least one high point on the wheel is recorded during at least one complete rotation of the wheel (161, 162, 171, 172), as a form of reference point.

7. Method according to one of the preceding Claims,
**characterized in that** there is automatic recording of at least one further measured value which represents a variable by which any inclined positioning of the steering wheel (18) can be identified, and the adjustment of the axle geometry is effected taking additional account of this further measured value.

8. Method according to one of the preceding Claims,
**characterized in that** at least one further measured value is recorded optically for the possible inclined positioning of the steering wheel (18).

9. Method according to one of the preceding Claims,
**characterized in that**
a) any inclined positioning of the steering wheel (18) is automatically corrected, and
b) a measured value which characterizes the original inclined positioning of the steering wheel (18) is deduced from at least one change of position, and recorded when the correction is made for the inclined positioning of the steering wheel.

10. Adjusting device for carrying out the method in accordance with one of the preceding Claims 1 to 9, **characterized by**
a) devices (2; 21, 24, 27) for holding a vehicle (1) in a suspended position, and
b) at least one automatic measurement device (53a, 53b, 53c, 53d) for the automatic recording of measured values from at least one wheel (161, 162, 171, 172) of a vehicle (1) which is in a suspended position (2) and has fully assembled chassis (14).

11. Adjusting device in accordance with Claim 10, **characterized by** at least one optical measuring system, in particular a laser measuring head (53a, 53b, 53c, 53d), as a measuring device for the automatic recording of the measured value from at least one wheel (161, 162, 171, 172) of a vehicle (1).

12. Adjusting device in accordance with Claims 10 or 11, **characterized by** at least a first automatic handling device (55, 56), assigned to a wheel or an axle on the vehicle, for the adjustment of the axle geometry of a vehicle (1), in particular for the adjustment of the track and/or the inclination on the mechanisms which serve as the front axle (151) and/or the rear axle (152) on the chassis (14) of a vehicle (1).

13. Adjusting device according to one of the preceding Claims 9 to 11, **characterized by** a measuring device (51, 52) for the automatic generation of a measured value which represents a variable by which any inclined positioning of the steering wheel (18) can be identified.

14. Adjusting device according to Claim 13, **characterized in that** the measuring devices (51, 52) contain an optical detection unit (51).

15. Adjusting device according to Claim 14, **characterized in that**
a) it comprises adjusting devices for the automatic correction of any tilted positioning of the steering wheel (18), and
b) the measuring devices (51) derive the measured value which identifies the original inclined positioning of the steering wheel (18) from at least one change of position, which occurs during the automatic correction for the inclined positioning of the steering wheel (18).

16. Adjusting device according to Claim 15, **characterized in that** the measuring devices (51) derive the change of position from the angular rotation of the steering wheel (18) which occurs during the automatic correction for the inclined positioning of the steering wheel (18).

17. Adjusting device according to Claim 14, 15 or 16, **characterized in that** the measuring devices (51) for the automatic generation of a measured value **characterizing** any possible inclined positioning of the steering wheel (18) have
a) a unit (51) for the automatic generation of image data showing, at least, the steering wheel (18) of the vehicle (1), e.g. a digital video camera, and
b) evaluation device which automatically generates from the image data a measured value which identifies any possible inclined positioning of the steering wheel (18).

18. Adjusting device according to Claims 14 to 17, **characterized by** a second handling device (52), which automatically inserts the measuring device (51) into the interior (17) of the vehicle (1), in particular into the driver's cab.

19. Adjusting device according to one of the Claims 11 to 18, **characterized by** a third handling device which automatically activates securing means on the chassis (14) of a vehicle, in particular counter elements on the track rods.

20. Adjusting device according to Claim 19, **characterized in that** the third handling device automatically limits the forces to be applied during activation of the securing means on the chassis, in particular the counter elements which must be applied to activate counter elements on the track rods.

21. Adjusting device according to one of the Claims 11 to 18, **characterized in that** the first handling device (55, 56) automatically activates securing means on the chassis (14) of a vehicle, in particular counter elements on the track rods.

22. Adjusting device according to Claim 21, **characterized in that** the first handling device automatically limits the forces to be applied during activation of the securing means on the chassis, in particular the counter elements which must be applied to activate counter elements on the track rods.

23. Adjusting device according to one of the Claims 11 to 22, **characterized by** an automatic centring device (2) for a vehicle (1), which aligns and fixes the vehicle in a precise suspended position, for the automatic adjustment of its axle geometry.

24. Adjusting device according to one of the Claims 11 to 23, **characterized by**
a) devices (21, 221, 222, 24, 27, 26) for holding down the suspended vehicle (1), and
b) lifting units (411, 412, 413, 414) which are raised from beneath a vehicle (1) in a suspended position (2) to produce an external counterforce on its chassis (14), in particular on its wheels (161, 162, 171, 172).

25. Adjusting device according to Claim 24, **characterized in that** the lifting units (411, 412, 413, 414) comprise roller devices (461, 462, 471, 472) for the wheels (161, 162, 171, 172) of a vehicle (1).

26. Adjusting device according to Claim 25, **characterized in that** the roller devices (461, 462, 471, 472) drive the wheels (161, 162, 171, 172) of a vehicle (1).

27. Adjusting device according to Claim 25 or 26, **characterized in that** the roller devices (461, 462, 471, 472) are located on the lifting units (411, 412, 413, 414) by means of floating plates (463, 464, 473, 474).

28. Adjusting device according to one of the Claims 24 to 27, **characterized in that** the lifting units (411, 412, 413, 414) raise the chassis (14) of a vehicle (1) which is in a suspended position at least into an empty weight position.

29. Adjusting device according to one of the Claims 24 to 28, **characterized by** automatic conveying means (416), at least for the lifting units (411, 412, 413, 414), by which the latter can be autonomously adjusted for the position of the wheels on the chassis (14) of a vehicle (1).

30. Adjusting device according to one of the Claims 24 to 29, **characterized by** automatic conveying means (416), at least for the lifting units (411, 412, 413, 414), by which the latter can be autonomously adjusted for the distance between the front and rear axles (151, 152) of the chassis (14) on a vehicle (1).

31. Adjusting device according to one of the Claims 29 or 30, **characterized by** at least one reading device (418) for data media (417), which is in particular directly attached to the vehicle (1), which reads out from a data medium (417) the current distance between the wheels and/or the front and rear axles (151, 152) of the chassis (14) on a vehicle (1), by which the automatic conveying means (416) for the lifting units (411, 412, 413, 414) are controlled.

32. Production line for vehicles with vehicle assembly equipment and an automatic adjusting device (53a, 53b, 53c, 53d, 55, 56) for the axle geometry of a vehicle (1) in accordance with one of the Claims 10 to 31, **characterized by** an overhead conveyor (2) for vehicles (1), by which vehicles (1) are conveyed into an automatic adjusting device for the axle geometry and out again after the automatic adjustment of the axle geometry.

33. Production line according to Claim 32, **characterized in that** the automatic adjusting device (53a, 53b, 53c, 53d, 55, 56) is integrated into the production line after the assembly installations which are used to attach at least the chassis (14) and the wheels (161, 162, 171, 172) to the vehicle (1).

34. Production line according to Claim 32 or 33, **characterized in that** the automatic adjusting device for the axle geometry of a vehicle is integrated into the production line after an assembly facility which is used to attach the steering wheel (18) of the vehicle(1).

## Revendications

1. Procédé pour régler la géométrie des essieux d'un véhicule (1), qui se trouve à la suite de son processus de fabrication dans une position (2) suspendue et comporte un châssis (14) définitivement monté constitué d'au moins un essieu (151) avant et un essieu (152) arrière, le réglage s'effectuant de façon automatique en tenant au moins compte de valeurs de mesure qui sont relevées de façon automatique sur les roues (161, 162, 171, 172) montées sur le châssis du véhicule (1) suspendu.

2. Procédé suivant la revendication 1, **caractérisé en ce que**
a) le véhicule (1) est maintenu serré,
b) une force antagoniste externe est exercée, notamment par l'intermédiaire des roues (161, 162, 171, 172) du véhicule (1) se trouvant dans une position (2) suspendue, sur le châssis (14) de ce dernier,
c) la suspension du châssis (14) du véhicule (1) est, au moyen de la force antagoniste externe, comprimée jusqu'environ dans une position de poids à vide.

3. Procédé suivant la revendication 1, **caractérisé en ce que**
a) le véhicule (1) est maintenu serré,
b) une force antagoniste externe est exercée, notamment par l'intermédiaire des roues (161, 162, 171, 172) du véhicule (1) se trouvant dans une position (2) suspendue, sur le châssis (14) de ce dernier,
c) la suspension du châssis (14) du véhicule (1) est, au moyen de la force antagoniste externe, comprimée jusqu'environ dans une position de conception, et
d) le châssis (14) du véhicule (1) est ensuite abaissé jusque dans une position de poids à vide.

4. Procédé suivant l'une des revendications précédentes, **caractérisé en ce que** sont relevées de façon automatique, comme valeurs de mesure, les valeurs de pincement et/ou de carrossage sur l'essieu (151) avant et/ou l'essieu (152) arrière.

5. Procédé suivant l'une des revendications précédentes, **caractérisé en ce qu'**au moins une roue (161, 162, 171, 172) du véhicule (1) se trouvant dans une position (2) suspendue est mise en rotation, et les valeurs de mesure sont relevées sur la roue en rotation.

6. Procédé suivant l'une des revendications précédentes, **caractérisé en ce qu'**afin de relever les valeurs de mesure pendant au moins une révolution complète de la roue (161, 162, 171, 172), au moins un point haut de la roue est relevé comme genre de point de référence.

7. Procédé suivant l'une des revendications précédentes, **caractérisé en ce qu'**on relève de façon automatique au moins une valeur de mesure supplémentaire qui constitue une dimension caractéristique pour une position inclinée possible du volant (18) de direction, et le réglage de la géométrie des essieux s'effectue en tenant compte en plus de cette valeur de mesure supplémentaire.

8. Procédé suivant l'une des revendications précédentes, **caractérisé en ce que** la valeur de mesure supplémentaire au moins unique pour une position inclinée possible du volant (18) de direction est relevée par voie optique.

9. Procédé suivant l'une des revendications précédentes, **caractérisé en ce que**
a) une position inclinée du volant (18) de direction est corrigée de façon automatique, et
b) une valeur de mesure caractéristique pour la position inclinée initiale du volant (18) de direction est déduite d'au moins une modification de position qui est relevée lors de la correction de la position inclinée du volant de direction.

10. Dispositif de réglage pour la mise en oeuvre du procédé suivant l'une des revendications précédentes 1 à 9, **caractérisé par**
a) des moyens (2 ; 21, 24, 27) pour maintenir un véhicule (1) dans une position suspendue, et
b) au moins un équipement (53a, 53b, 53c, 53d) de mesure automatique pour relever de façon automatique des valeurs de mesure sur au moins une roue (161, 162, 171, 172) d'un véhicule (1) se trouvant dans une position (2) suspendue et dont le châssis (14) est définitivement monté.

11. Dispositif de réglage suivant la revendication 10, **caractérisé par** au moins un système de mesure optique, notamment une tête (53a, 53b, 53c, 53d) de mesure laser, comme équipement de mesure pour relever de façon automatique la valeur de mesure sur au moins une roue (161, 162, 171, 172) d'un véhicule (1).

12. Dispositif de réglage suivant la revendication 10 ou 11, **caractérisé par** au moins un premier équipement (55, 56) de manipulation automatique, associé à une roue ou encore à un essieu du véhicule, pour l'ajustement de la géométrie des essieux d'un véhicule (1), notamment pour les moyens qui, sur le châssis (14) d'un véhicule (1), servent à régler le pincement et/ou le carrossage sur l'essieu (151) avant et/ou l'essieu (152) arrière.

13. Dispositif de réglage suivant l'une des revendications précédentes 9 0 11, **caractérisé par** des moyens (51, 52) de mesure pour générer de façon automatique une valeur de mesure qui constitue une dimension caractéristique pour une position inclinée possible du volant (18) de direction.

14. Dispositif de réglage suivant la revendication 13, **caractérisé en ce que** les moyens (51, 52) de mesure contiennent une unité (51) de relèvement optique.

15. Dispositif de réglage suivant la revendication 14, **caractérisé en ce que**
a) des moyens de réglage sont présents pour la correction automatique d'une position inclinée du volant (18) de direction, et
b) les moyens (51) de mesure déduisent la valeur de mesure caractérisant la position inclinée initiale du volant (18) de direction d'au moins une modification de position qui apparaît lors de la correction automatique de la position inclinée du volant (18) de direction.

16. Dispositif de réglage suivant la revendication 15, **caractérisé en ce que** les moyens (51) de mesure déduisent la modification de position d'un angle de rotation du volant (18) de direction qui apparaît lors de la correction automatique de la position inclinée du volant (18) de direction.

17. Dispositif de réglage suivant la revendication 14, 15 ou 16, **caractérisé en ce que** les moyens (51) de mesure comportent, pour générer de façon automatique une valeur de mesure caractérisant une position inclinée possible du volant (18) de direction,
a) une unité (51) pour générer de façon automatique des données d'image au moins du volant (18) de direction du véhicule (1), par exemple une caméra vidéo numérique, et
b) des moyens d'interprétation qui, à partir des données d'image, génèrent de façon automatique une valeur de mesure caractérisant une position inclinée possible du volant (18) de direction.

18. Dispositif de réglage suivant l'une des revendications 14 à 17, **caractérisé par** un deuxième équipement (52) de manipulation, qui rentre de façon automatique les moyens (51) de mesure dans l'habitacle (17) d'un véhicule (1), notamment dans le poste de conduite.

19. Dispositif de réglage suivant l'une des revendications 11 à 18, **caractérisé par** un troisième équipement de manipulation, qui active de façon automatique des moyens d'assujettissement sur le châssis (14) d'un véhicule, notamment des éléments de blocage sur les barres d'accouplement.

20. Dispositif de réglage suivant la revendication 19, **caractérisé en ce que** le troisième équipement de manipulation limite de façon automatique les forces à exercer lors de l'activation des moyens d'assujettissement sur le châssis, notamment les couples à exercer lors d'une activation d'éléments de blocage sur les barres d'accouplement.

21. Dispositif de réglage suivant l'une des revendications 11 à 18, **caractérisé en ce que** le premier équipement (55, 56) de manipulation active de façon automatique des moyens d'assujettissement sur le châssis (14) d'un véhicule, notamment des éléments de blocage sur les barres d'accouplement.

22. Dispositif de réglage suivant la revendication 21, **caractérisé en ce que** le premier équipement de manipulation limite de façon automatique les forces à exercer lors de l'activation des moyens d'assujettissement sur le châssis, notamment les couples à exercer lors d'une activation d'éléments de blocage sur les barres d'accouplement.

23. Dispositif de réglage suivant l'une des revendications 11 à 22, **caractérisé par** un dispositif (2) de centrage automatique pour un véhicule (1 ), qui aligne et immobilise ce dernier en position exacte pour un réglage automatique de sa géométrie des essieux dans une position suspendue.

24. Dispositif de réglage suivant l'une des revendications 11 à 23, **caractérisé par**
a) des moyens (21, 221, 222, 24, 27, 26) pour maintenir serré le véhicule (1 ) suspendu, et
b) des unités (411, 412, 413, 414) de levage, qui afin de produire une force antagoniste externe sont approchées par le dessous contre le châssis (14) du véhicule (1) se trouvant dans une position (2) suspendue, notamment contre ses roues (161, 162, 171, 172).

25. Dispositif de réglage suivant la revendication 24, **caractérisé en ce que** les unités (411, 412, 413, 414) de levage comportent des équipements (461, 462, 471, 472) à galets de roulement pour les roues (161, 162, 171, 172) d'un véhicule (1).

26. Dispositif de réglage suivant la revendication 25, **caractérisé en ce que** les équipements (461, 462, 471, 472) à galets de roulement entraînent les roues (161, 162, 171, 172) d'un véhicule (1).

27. Dispositif de réglage suivant la revendication 25 ou 26, **caractérisé en ce que** les équipements (461, 462, 471, 472) à galets de roulement sont montés sur les unités (411, 412, 413, 414) de levage par l'intermédiaire de plaques (463, 464, 473, 474) flottantes.

28. Dispositif de réglage suivant l'une des revendications 24 à 27, **caractérisé en ce que** les unités (411, 412, 413, 414) de levage positionnent le châssis (14) d'un véhicule (1) se trouvant dans une position suspendue au moins dans une position de poids à vide.

29. Dispositif de réglage suivant l'une des revendications 24 à 28, **caractérisé par** des moyens (416) de translation automatique au moins pour les unités (411, 412, 413, 414) de levage, de sorte que celles-ci peuvent être adaptées de façon automatique à la position des roues sur le châssis (14) d'un véhicule (1).

30. Dispositif de réglage suivant l'une des revendications 24 à 29, **caractérisé par** des moyens (416) de translation automatique au moins pour les unités (411, 412, 413, 414) de levage, de sorte que celles-ci peuvent être adaptées de façon automatique à la distance entre l'essieu (151) avant et l'essieu (152) arrière du châssis (14) d'un véhicule (1).

31. Dispositif de réglage suivant la revendication 29 ou 30, **caractérisé par** au moins un équipement (418) de lecture pour des supports (417) de données, qui lit la distance actuelle entre les roues et/ou entre l'essieu (151) avant et l'essieu (152) arrière du châssis (14) d'un véhicule (1) à partir d'un support (417) de données qui est notamment installé directement sur un véhicule (1), et asservit ainsi les moyens (416) de translation automatique pour les unités (411, 412, 413, 414) de levage.

32. Chaîne de fabrication de véhicules comportant des équipements de montage de véhicules et un dispositif (53a, 53b, 53c, 53d, 55, 56) suivant l'une des revendications 10 à 31 de réglage automatique de la géométrie des essieux d'un véhicule (1), **caractérisée par** un dispositif (2) de convoyage suspendu pour des véhicules (1), de sorte que des véhicules (1) sont rentrés dans un dispositif de réglage automatique de la géométrie des essieux, et en sont ressortis une fois effectué le réglage automatique de la géométrie des essieux.

33. Chaîne de fabrication suivant la revendication 32, **caractérisée en ce que** le dispositif (53a, 53b, 53c, 53d, 55, 56) de réglage automatique est intégré dans la chaîne de fabrication à la suite d'équipements de montage qui servent au moins à monter le châssis (14) et les roues (161, 162, 171, 172) du véhicule (1).

34. Chaîne de fabrication suivant la revendication 32 ou 33, **caractérisée en ce que** le dispositif de réglage automatique de la géométrie des essieux d'un véhicule est intégré au moins à la suite d'un équipement de montage qui sert à monter le volant (18) de direction du véhicule (1 ).
